Europäisches Patentamt

European Patent Office

Office européen des brevets

(19)

(11) Veröffentlichungsnummer: **0 173 669**
A2

(12) **EUROPÄISCHE PATENTANMELDUNG**

(21) Anmeldenummer: 85890115.0

(22) Anmeldetag: 20.05.85

(51) Int. Cl.⁴: **F 27 B 14/02**, F 27 D 3/14

(30) Priorität: 01.06.84 AT 1813/84

(43) Veröffentlichungstag der Anmeldung: 05.03.86
Patentblatt 86/10

(84) Benannte Vertragsstaaten: CH DE FR GB IT LI SE

(71) Anmelder: **VOEST-ALPINE Aktiengesellschaft,
Muldenstrasse 5, A-4020 Linz (AT)**

(72) Erfinder: **Riegler, Ernst, Grollerstrasse 5, A-4470 Enns
(AT)**
Erfinder: **Zajicek, Ernst, Donaulände 10,
A-4100 Ottensheim (AT)**
Erfinder: **Mühlbauer, Johann, A-4153 Peilstein 87 (AT)**

(74) Vertreter: **Wolfram, Gustav, Dipl.-Ing.,
Schwindgasse 7 P.O. Box 205, A-1041 Wien (AT)**

(54) Kippbares metallurgisches Gefäss.

(57) Ein kippbares metallurgisches Gefäss (1), insbesondere ein Elektroschmelzofen oder Plasmaprimärschmelzofen, mit einem bombierten Boden ist in einem am Fundament kippbar gelagerten Wiegenrahmen (7) abgestützt. Um bei einem derartigen Gefäss (1) einen möglichst kurzen Weg der Schmelze beim Abstich zu gewährleisten, gleichzeitig ein einfaches Abschlacken und das Behalten eines Restsumpfes zu ermöglichen ist im Boden mindestens eine exzentrisch angeordnete verschliessbare und oberhalb eines in Abstichstellung bringbaren Aufnahmegefässes (31) angeordnete Abstichöffnung vorgesehen, die durch eine mittels eines Hebels (14) verschwenkbare Verschlussklappe (13) verschliessbar ist, wobei der Hebel (14) drehfest mit einer Welle (15) verbunden ist, die mittels eines am Wiegenrahmen (7) montierten Druckmittelzylinders (26) über eine Betätigungsstange (22) drehbar ist, wobei sich die Betätigungsstange (22) über den Strahlungsbereich des Aufnahmegefässes (31) hinaus erstreckt.

- 1 -                                    0173669

Kippbares metallurgisches Gefäß

Die Erfindung betrifft ein kippbares metallurgisches Gefäß, insbesondere Elektroschmelzofen oder Plasmaprimärschmelzofen, mit einem bombierten Boden, wobei das Gefäß in einem am Fundament kippbar gelagerten Wiegenrahmen abgestützt ist.

Ein metallurgisches Gefäß dieser Art ist aus der AT-PS 368 625 bekannt. Dieses bekannte Gefäß wird beim Abstechen gekippt bis die Stahlschmelze durch eine am Gefäß seitlich angeordnete Ausgießschnauze in eine unterhalb der Schnauze in Stellung gebrachte Pfanne ausfließt.

Um den Weg der Schmelze beim Abstich zu verkürzen, ist es bekannt (DE-C 29 21 702 und 29 21 742), das Gefäß ortsfest unbeweglich aufzustellen und mit einer im Boden vorgesehenen Abstichöffnung zu versehen, welche Abstichöffnung durch eine verschwenkbare Verschlußklappe, die mittels eines Druckmittelzylinders an den Boden des Gefäßes anpreßbar ist, zu verschließen ist. Dabei ergeben sich Schwierigkeiten beim Abschlacken, da die Abstichöffnung mit der Verschlußklappe nur einmal geöffnet und ohne vorherige Lochpflege – die ein entleertes Gefäß erfordert – nicht mehr verschlossen werden kann. Daraus ergibt sich die Notwendigkeit, die Schlacke in die die Stahlschmelze aufnehmende Pfanne zu gießen, was verschiedene Nachteile hat, wie einen hohen Verschleiß der Pfannenausmauerung, die Gefahr der Rückphosphorung sowie Schwierigkeiten bei einer nachfolgenden Behandlung der Stahlschmelze in der Pfanne.

Die Abstichöffnung muß bei dem bekannten nicht kippbaren Gefäß am tiefsten Punkt des Bodens vorgesehen sein, um das Gefäß vollständig entleeren zu können. Will man nach dem Abstich im Gefäß eine gewisse Reststahl- und Restschlackenmenge belassen, d.h. in sog. "Flüssig-Sumpffahrweise" schmelzen ist es erforderlich, neben der Abstichöffnung am tiefsten Punkt noch mindestens eine weitere Abstichöffnung im Abstand anzuordnen. Durch Öffnung dieser zweiten Abstichöffnung ist es möglich, einen Restsumpf im Inneren zu behalten, jedoch ist es nicht möglich, die Restsumpfmenge zu variieren.

Die Erfindung bezweckt die Vermeidung dieser Nachteile und Schwierigkeiten und stellt sich die Aufgabe, ein metallurgisches Gefäß zu schaffen, bei dem die Schmelze beim Abstich einen möglichst kurzen Weg zurücklegt, durch welches jedoch ein Abschlacken in einfacher Weise und das Behalten eines Restsumpfes im Gefäß möglich ist. Das Gefäß soll sich durch hohe Betriebssicherheit, insbesondere des Stichlochverschlusses, auszeichnen.

Diese Aufgabe wird erfindungsgemäß bei einem kippbaren metallurgischen Gefäß der eingangs beschriebenen Art dadurch gelöst, daß im Boden mindestens eine exzentrisch angeordnete verschließbare und oberhalb eines in Abstichstellung bringbaren Aufnahmegefäßes angeordnete Abstichöffnung vorgesehen ist, die durch eine mittels eines Hebels verschwenkbare Verschlußklappe verschließbar ist, wobei der Hebel drehfest mit einer Welle verbunden ist, die mittels eines am Wiegenrahmen montierten Druckmittelzylinders über eine Betätigungsstange drehbar ist, wobei sich die Betätigungsstange über den Strahlungsbereich

0173669

des Aufnahmegefäßes hinaus erstreckt.

Um mit einem geringen Kolbenweg des Druckmittelzylinders die Verschlußklappe um einen großen Winkel betätigen zu können, weist vorzugsweise die Betätigungsstange eine mit einer Innenkühlung versehene Zahnstange auf, die in ein an der Welle montiertes Zahnrad eingreift.

Eine bevorzugte Ausführungsform ist dadurch gekennzeichnet, daß die Betätigungsstange durch den Wiegenrahmen hindurch geführt und der Druckmittelzylinder an der Außenseite des Wiegenrahmens befestigt ist. Dadurch ist es möglich, den Druckmittelzylinder auch bei einer innerhalb des Wiegenrahmens angeordneten Abstichöffnung in eine besonders geschützte Zone zu verlegen, wobei der Wiegenrahmen außer seiner tragenden Funktion auch eine abschirmende Funktion für den Druckmittelzylinder übernimmt.

Um ein unbeabsichtigtes Öffnen der Verschlußklappe zu verhindern, ist zweckmäßig die Betätigungsstange in Schließstellung der Verschlußklappe durch einen am Wiegenrahmen angeordneten Riegel arretierbar.

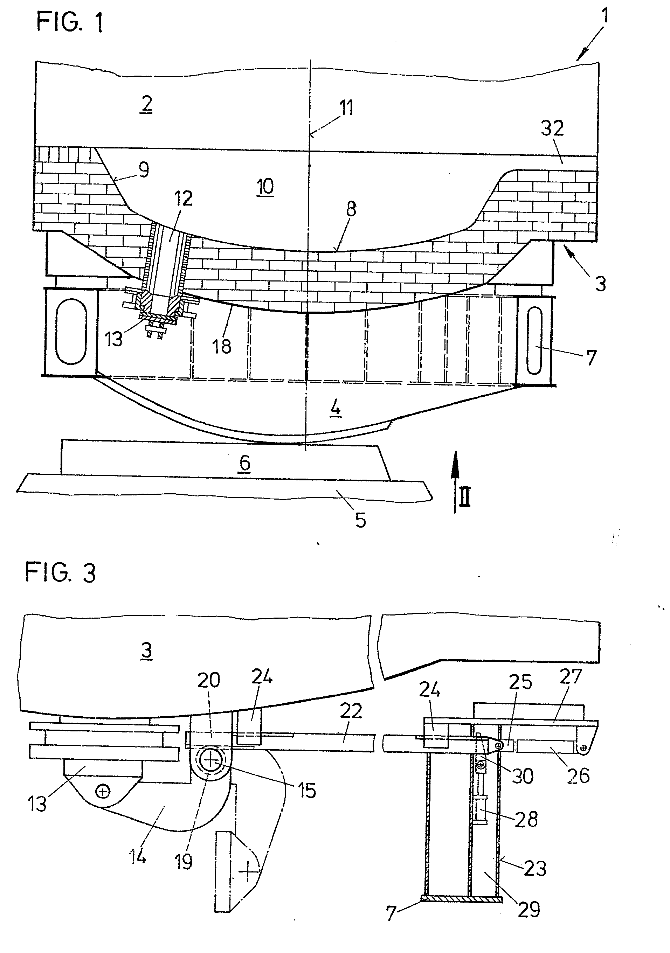

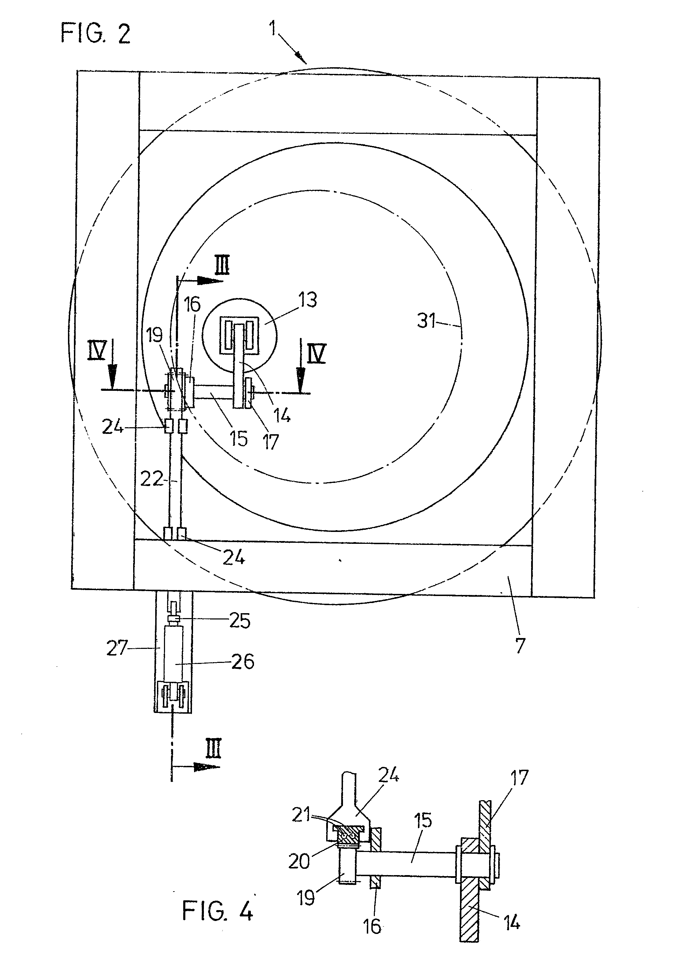

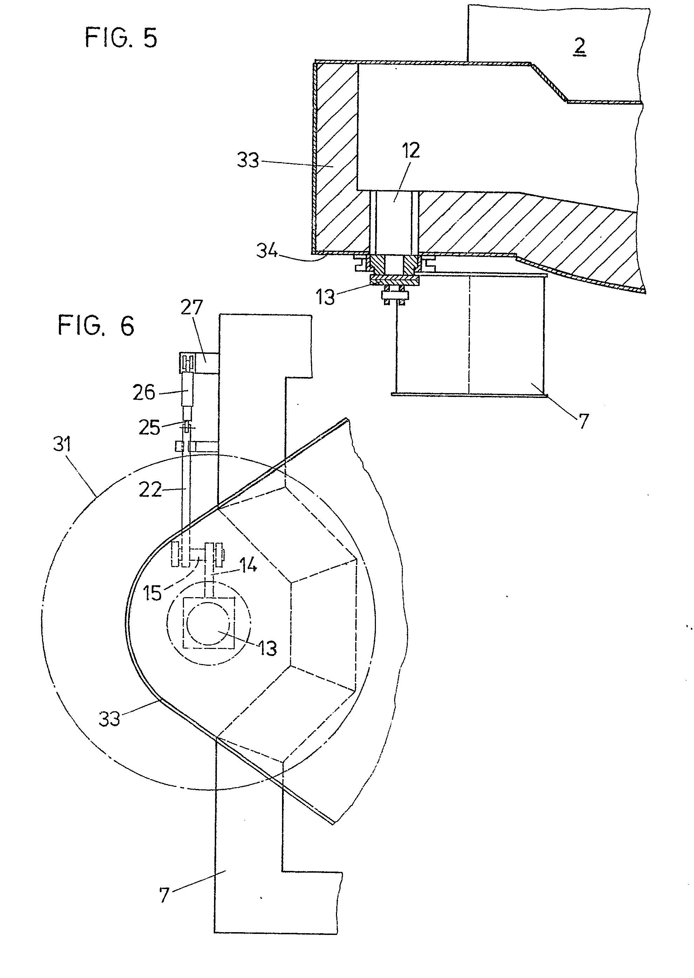

Die Erfindung ist nachstehend anhand der Zeichnung an zwei Ausführungsbeispielen näher erläutert, wobei Fig. 1 einen Vertikalschnitt durch einen Elektroschmelzofen und Fig. 2 eine Ansicht in Richtung des Pfeiles II-II der Fig. 1 einer ersten Ausführungsform zeigen. Fig. 3 ist eine Darstellung eines entlang der Linie III-III geführten Schnittes, Fig. 4 eines entlang der Linie IV-IV geführten Schnittes. Fig. 5 zeigt ein Detail in zu Fig. 1 analoger Darstellung einer zweiten Ausführungsform. Fig. 6 ist ein Grundriß der zweiten Ausführungsform.

Ein als Elektroschmelzofen ausgebildetes metallurgisches Gefäß 1, das aus einem Ober- 2 und Unterteil 3 zusammengesetzt ist, ist mit mittels Wiegen 4 auf an einem Fundament 5 angeordneten Wiegenunterbauten 6 kippbar gelagert. Die Wiegen 4 sind an einem Wiegenrahmen 7, auf dem der Unterteil 3 des Gefäßes aufsitzt, montiert.

Der Unterteil 3 ist von einem bombierten Boden 8 und seitlich hochgezogenen Seitenwänden 9 zur Bildung einer das Schmelzenbad aufnehmenden und mit feuerfesten Steinen ausgekleideten Wanne 10 gebildet. Exzentrisch zur Mittelachse 11 des einen kreisförmigen Grundriß aufweisenden Gefäßes 1 ist im Boden 8 eine Abstichöffnung 12 vorgesehen, die, wie aus Fig. 2 ersichtlich ist, innerhalb des Wiegenrahmens 7 liegt.

Zum Verschließen der Abstichöffnung 12 ist eine Verschlußklappe 13 vorgesehen, die an einem Hebel 14 angelenkt ist, der drehfest mit einer Welle 15 verbunden ist. Die Welle 15 ist mittels zweier Lagerungen 16, 17 am Blech- mantel 18 des Bodens 8 drehbar gelagert. Zur Betätigung der Welle 15 ist an dem den Hebel 14 tragenden Ende gegenüberliegenden Ende ein Zahnrad 19 drehfest montiert, in welches eine Zahnstange 20 eingreift. Die Zahnstange 20, die mit Bohrungen 21 zwecks Vorsehens einer Innenkühlung ausgestattet ist, ist am Ende einer Betätigungsstange 22 angeordnet, die durch den Wiegenrahmen 7 hindurch bis zu dessen Außenseite 23 führt. Zur exakten Führung der Betätigungsstange 22 sind diese klammerartig übergreifende Halterungen 24 vorgesehen, wobei eine Halterung am Blechmantel 18 des Bodens 8 und eine am Wiegenrahmen 7 angeordnet ist.

An das durch den Wiegenrahmen nach außen reichende Ende der Betätigungsstange 22 ist ein Kolben 25 eines Druckmittelzylinders 26 angelenkt, der an einer am Wiegenrahmen 7 befestigten Konsole 27 montiert ist. Der Kolben 25 des Druckmittelzylinders ist federbeaufschlagt, sodaß bei einem Druckausfall die Verschlußklappe 13 der Abstichöffnung 12 mittels Federkraft geöffnet wird.
Um ein unbeabsichtigtes Öffnen der Verschlußklappe 13
zu verhindern, ist ein weiterer Druckmittelzylinder 28
vorgesehen, der im Inneren 29 des kastenförmig ausgebildeten Wiegenrahmens 7 angeordnet ist und einen
Riegel 30 betätigt, der in die Betätigungsstange 22
eingreift, sobald die Verschlußklappe 13 in die die
Abstichöffnung verschließende Position gebracht ist.

Der Hub des die Verschlußklappe 13 betätigenden Druckmittelzylinders 26 ist so ausgelegt, daß der Hebel
um etwa 90°, wie aus Fig. 3 ersichtlich ist, geschwenkt
werden kann und die Verschlußklappe 13 die Abstichöffnung
12 vollkommen freigibt. Mittels einer elektrischen Verriegelungsschaltung ist sichergestellt, daß vor dem
Öffnen der Verschlußklappe 13 der Riegel 30 in eine
rückgezogene Position bewegt werden muß. Damit der
Riegel nicht bei Druckabfall selbsttätig und unbeabsichtigt in diese Position gelangt, ist der Kolben des
den Riegel 30 betätigenden Druckmittelzylinders 28
federbeaufschlagt. Die Feder drückt den Riegel 30
in die in Fig. 3 dargestellte Verriegelungsposition,
aus der er notfalls manuell zurückgeschoben werden muß.

Wie aus Fig. 2 ersichtlich, ist der Druckmittelzylinder
26 außerhalb des Strahlungsbereiches der unterhalb der
Abstichöffnung 12 in Stellung gebrachten Pfanne 31 -
deren Mündungsdurchmesser in Fig. 2 mit strichpunktierten
Linien angedeutet ist - angeordnet, u.zw. durch entsprechende Längenabmessung der Welle 15 und der Betätigungsstange 22. Der Wiegenrahmen 7 fungiert gemäß
dieser Ausführungsform als Schutz für den außerhalb
des Wiegenrahmens 7 angeordneten Druckmittelzylinder 26,
ohne die Zugänglichkeit zu diesem Druckmittelzylinder 26
zu behindern.

0173669

Die Funktion der Vorrichtung ist folgende: Zu Beginn des Schmelzens wird die Abstichöffnung 12 mit einem Granulat gefüllt, welches das Eindringen von Schmelze in die Abstichöffnung 12 und damit das Vordringen von Schmelze zur Verschlußklappe 13 verhindert. Dieses Granulat sintert an dem der Schmelze zugekehrten Ende der Abstichöffnung 12. Beim Abstechen wird die Verschlußklappe 13 geöffnet. Durch den ferrostatischen Druck bricht die durch das Granulat gebildete Sinterbrücke und die Schmelze kann durch die Abstichöffnung 12 ausfließen. Je nach Kippstellung des Gefäßes 1 fließt die gesamte Schmelze aus oder es bleibt eine Restschmelzenmenge im Gefäß zurück. Zum Zweck des Abschlackens wird das Gefäß 1 in die entgegengesetzte Richtung gekippt bis die Schlacke durch die Schlackenöffnung 32, die mit einer nicht dargestellten Türe verschließbar ist, ausfließt.

Gemäß der in den Fig. 5 und 6 dargestellten Ausführungsform weist der Unterteil des metallurgischen Gefäßes einen erkerartigen Vorsprung 33 auf, der über den Wiegenrahmen 7 vorsteht. Der Wiegenrahmen 7 ist an der Stelle des Vorsprungs 33 eingebuchtet ausgebildet. Die den Hebel 14 und das Zahnrad 19 tragende Welle 15 ist bei dieser Ausführungsform an dem Blechmantel 34 des Vorsprungs 33 montiert. Der Druckmittelzylinder 26 ist wiederum an einer am Wiegenrahmen starr angeordneten Konsole 27 angelenkt. Auch hier ist die Betätigungsstange 22 so bemessen, daß sie über den Strahlungsbereich, d.h. die Mündung der in Fig. 6 mit strichpunktierten Linien dargestellten Pfanne 31, die unterhalb der Abstichöffnung 12 in Stellung gebracht ist, ragt.

Patentansprüche:

1. Kippbares metallurgisches Gefäß (1), insbesondere Elektroschmelzofen oder Plasmaprimärschmelzofen, mit einem bombierten Boden (8), wobei das Gefäß (1) in einem am Fundament (5) kippbar gelagerten Wiegenrahmen (7) abgestützt ist, dadurch gekennzeichnet, daß im Boden (8) mindestens eine exzentrisch angeordnete verschließbare und oberhalb eines in Abstichstellung bringbaren Aufnahmegefäßes (31) angeordnete Abstichöffnung vorgesehen ist, die durch eine mittels eines Hebels (14) verschwenkbare Verschlußklappe (13) verschließbar ist, wobei der Hebel (14) drehfest mit einer Welle (15) verbunden ist, die mittels eines am Wiegenrahmen (7) montierten Druckmittelzylinders (26) über eine Betätigungsstange (22) drehbar ist, wobei sich die Betätigungsstange (22) über den Strahlungsbereich des Aufnahmegefäßes (31) hinaus erstreckt.

2. Gefäß nach Anspruch 1, dadurch gekennzeichnet, daß die Betätigungsstange (22) eine vorzugsweise mit einer Innenkühlung versehene Zahnstange (20) aufweist, die in ein an der Welle (15) montiertes Zahnrad (19) eingreift.

3. Gefäß nach Anspruch 1 oder 2, dadurch gekennzeichnet, daß die Betätigungsstange (22) durch den Wiegenrahmen (7) hindurch geführt und der Druckmittelzylinder (26) an der Außenseite (23) des Wiegenrahmens (7) befestigt ist.

4. Gefäß nach Anspruch 1 bis 3, dadurch gekennzeichnet, daß die Betätigungsstange (22) in Schließstellung der Verschlußklappe (13) durch einen am Wiegenrahmen (7) angeordneten Riegel (30) arretierbar ist.

FIG. 1

FIG. 3

0173669

1\3

FIG. 2

FIG. 4

FIG. 5

FIG. 6